# EUROPEAN PATENT APPLICATION

(11) **EP 4 415 224 A1**
(43) Date of publication of application: **14.08.2024**
(21) Application number: 22878707.3
(22) Date of filing: 12.08.2022
(51) Int. Cl.: H02J 50/80, H02J 50/12, H02J 50/40, H02J 7/00, H04B 5/00

(54) **WIRELESS POWER TRANSMISSION DEVICE AND OPERATION MODE CONTROL METHOD BASED ON DETECTING WIRELESS POWER RECEPTION DEVICE BY WIRELESS POWER TRANSMISSION DEVICE**

(30) Priority: 07.10.2021 KR 20210133262
(71) Applicant: Samsung Electronics Co., Ltd., Suwon-si, Gyeonggi-do 16677 (KR)
(72) Inventor: LEE, Kyungmin, Suwon-si, Gyeonggi-do 16677 (KR); PARK, Sungbum, Suwon-si, Gyeonggi-do 16677 (KR); LEE, Sangwook, Suwon-si, Gyeonggi-do 16677 (KR); CHOI, Bohwan, Suwon-si, Gyeonggi-do 16677 (KR); CHOI, Jinsoo, Suwon-si, Gyeonggi-do 16677 (KR)
(74) Representative: Gulde & Partner
(86) International application number: PCT/KR2022/012120
(87) International publication number: WO 2023/058886

(57) **Abstract**

A wireless power transmission device according to various embodiments of the present document may comprise a communication module, power transmission circuitry, and at least one processor, wherein the at least one processor is configured to: output first power for detecting of an external wireless power reception device through the power transmission circuitry before wireless power transmission; identify a first phase of a first voltage and/or a first current at the output of the first power; identify a second phase of a second voltage or a second current by the wireless power reception device through the power transmission circuitry during the output of the first power; identify a difference between the first phase and the second phase; identify the wireless power reception device on the basis of the difference between the first phase and the second phase; and control the power transmission circuitry to transmit second power for wireless power transmission to the identified wireless power reception device. Other embodiments may also be possible.

## Description

### [Technical Field]

Various embodiments of the disclosure relate to wireless power transmission devices.

### [Background Art]

Recently, electronic devices have developed into various forms for user convenience, and home appliances used at home are also developing into safe and convenient forms.

Among home appliances are electronic devices capable of induction heating as heat cooking devices (hereinafter also referred to as 'electronic devices' or 'induction electronic devices'). The electronic devices may be operated in an electromagnetic induction method in which a high-frequency alternating current flows through a coil to generate a magnetic field in the coil to thereby heat the magnetic object placed on the induction coil. The electronic devices heat only the inside of the small magnetic object and may thus have enhanced thermal efficiency and shortened cooking time. Thus, such electronic devices have been widely used compared to gas ranges and highlight ranges in terms of safety, thermal efficiency, and heating speed.

### [Detailed Description of the Invention]

### [Technical Problem]

The induction electronic device may provide more convenience if it is capable of electromagnetic induction wireless power transmission as well as induction heating. For example, if an induction electronic device includes a wireless power transmission device to heat the container through a part (induction heating device (or induction heating unit or induction heating module or induction heating part)) of the induction electronic device while allowing an external wireless power reception device to wirelessly receive power through another part (wireless power transmission device (or wireless power transmission unit or wireless power transmission module)) of the induction electronic device, more convenience may be achieved.

There may be various external wireless power reception devices capable of receiving wireless power through a wireless power transmission device. For example, the external wireless power reception devices capable of receiving wireless power through the wireless power transmission device of the induction may include toasters, blenders, and/or kettles, or other various small home appliances (or small objects). External wireless power reception devices each may require wireless power reception power.

The wireless power transmission device may be required to identify the wireless power reception power required by each of the external wireless power reception devices and transmit wireless power appropriate for each of the external wireless power reception devices.

According to various embodiments, there may be provided a wireless power transmission device capable of identifying the type of an external wireless power reception device upon detecting the external wireless power reception device and transmitting wireless power in the operation mode corresponding to the identified external wireless power reception device and an operation mode control method based on wireless power reception device detection in the wireless power transmission device.

According to various embodiments, there may be provided a wireless power transmission device capable of transmitting wireless power in a wireless power transmission magnitude and a wireless power transmission scheme corresponding to an external wireless power reception device identified upon identifying the external wireless power reception device and an operation mode control method based on wireless power reception device detection in the wireless power transmission device.

### [Technical Solution]

According to an embodiment of the disclosure, a wireless power transmission device may comprise power transmission circuitry and at least one processor. The at least one processor may be configured to output first power for detecting an external wireless power reception device through the power transmission circuitry before wireless power transmission and identify a first phase of a first current or a first voltage when outputting the first power, identify a second phase of a second current or a second voltage by the wireless power reception device through the power transmission circuitry while outputting the first power, identify a difference between the first phase and the second phase, identify the wireless power reception device based on the difference between the first phase and the second phase, and control the power transmission circuitry to transmit second power for wireless power transmission to the identified wireless power reception device.

According to an embodiment, a method for controlling an operation mode based on wireless power reception device detection by a wireless power transmission device may comprise outputting first power for detecting an external wireless power reception device through power transmission circuitry before wireless power transmission and identifying a first phase of a first current or a first voltage when outputting the first power, identifying a second phase of a second current or a second voltage by the wireless power reception device through the power transmission circuitry while outputting the first power, identifying a difference between the first phase and the second phase, identifying the wireless power reception device based on the difference between the first phase and the second phase, and controlling the power transmission circuitry to transmit second power for wireless power transmission to the identified wireless power reception device.

According to an embodiment, in a non-transitory storage medium storing instructions, the instructions may be configured to, when executed by at least one processor, enable the at least one processor to perform at least one operation. The at least one operation may comprise outputting first power for detecting an external wireless power reception device through power transmission circuitry before wireless power transmission and identifying a first phase of a first current or a first voltage when outputting the first power, identifying a second phase of a second current or a second voltage by the wireless power reception device through the power transmission circuitry while outputting the first power, identifying a difference between the first phase and the second phase, identifying the wireless power reception device based on the difference between the first phase and the second phase, and controlling the power transmission circuitry to transmit second power for wireless power transmission to the identified wireless power reception device.

### [Advantageous Effects]

According to various embodiments, it is possible to more easily identify the type of an external wireless power reception device using the phase difference of transmission/reception signals upon detecting the external wireless power reception device in the wireless power transmission device and transmit wireless power in the operation mode corresponding to the identified external wireless power reception device.

According to various embodiments, it is possible to transmit wireless power in the wireless power transmission magnitude and wireless power transmission scheme corresponding to the external wireless power reception device more easily identified using the phase difference of transmission/reception signals upon detecting the external wireless power reception device in the wireless power transmission device.

Effects of the disclosure are not limited to the foregoing, and other unmentioned effects would be apparent to one of ordinary skill in the art from the following description.

### [Brief Description of Drawings]

FIG. 1 is a view illustrating a wireless power transmission device and wireless power reception devices according to an embodiment;
FIG. 2 is a block diagram illustrating a wireless power transmission device and a wireless power reception device according to an embodiment;
FIG. 3 is a view illustrating examples of a C1 value and a C2 value of wireless power reception devices according to an embodiment;
FIG. 4 is a view illustrating examples of a first phase of a first voltage when a wireless power transmission device outputs first power (e.g., ping power) before wireless power transmission and second phases of second currents measured as a wireless power reception device responds to the first power according to an embodiment;
FIG. 5 is a flowchart illustrating a mode control operation based on wireless power reception device detection in a wireless power transmission device according to an embodiment;
FIG. 6 is a view illustrating a configuration of an induction electronic device including a wireless power transmission device according to an embodiment;
FIG. 7A is a view illustrating an example induction electronic device according to an embodiment;
FIG. 7B is a view illustrating an example in which a wireless power reception device is placed on an exposure surface of an induction electronic device according to an embodiment; and
FIG. 7C is a view illustrating an example in which a cooking device is placed on an exposure surface of an induction electronic device according to an embodiment.
The same or similar reference denotations may be used to refer to the same or similar elements throughout the specification and the drawings.

### [Mode for Carrying out the Invention]

Various embodiments of the present disclosure are now described with reference to the accompanying drawings. As used herein, the term "user" may denote a human or another device using the electronic device.

The terms as used herein are provided merely to describe some embodiments thereof, but not to limit the scope of other embodiments of the present disclosure. It is to be understood that the singular forms "a," "an," and "the" include plural references unless the context clearly dictates otherwise. All terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

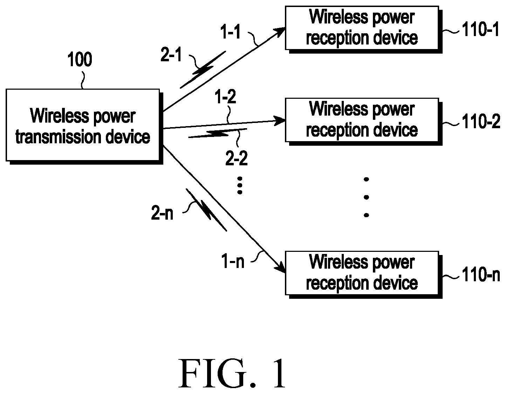

FIG. 1 is a view illustrating a wireless power transmission device and wireless power reception devices according to an embodiment.

Referring to FIG. 1, a wireless power transmission device 100 according to an embodiment may wirelessly provide power 1-1, 1-2, ..., 1-n, respectively, to at least one of wireless power reception devices 110-1 to 110-n. For example, the wireless power transmission device 100 may wirelessly provide power to an authenticated wireless power reception device that has performed a designated authentication procedure for wireless power transmission/reception.

The wireless power transmission device 100 according to an embodiment may communicate with each of the wireless power reception devices 110-1 to 110-n. For example, the wireless power transmission device 100 and each of the wireless power reception devices 110-1 to 110-n may process or transmit/receive each of the packets 2-1 to 2-n configured in a designated frame. For example, the wireless power transmission device 100 may be a wireless power transmission device included in an induction electronic device, and the wireless power reception devices 110-1 to 110-n may be external wireless power reception devices capable of receiving wireless power through the wireless power transmission device included in the induction electronic device, and may include a first wireless power reception device (e.g., a blender), a second wireless power reception device (e.g., a kettle), a third wireless power reception device (e.g., a toaster), and/or other various small home appliances (or small objects).

The wireless power transmission device 100 according to an embodiment may wirelessly transmit power to at least one of the wireless power reception devices 110-1 to 110-n in a resonant schem. Each of the wireless power reception devices 110-1 to 110-n according to an embodiment may perform a designated operation (or function) (e.g., a toaster function, a blender function, or a kettle function) using power transmitted from the wireless power transmission device 100. For example, each of the wireless power reception devices 110-1 to 110-n may include a storage battery (or battery) capable of accumulating power transmitted from the wireless power transmission device 100, and may perform a designated operation (or function) using the accumulated power.

The wireless power transmission device 100 according to an embodiment may output first power (e.g., ping power) for detecting a wireless power reception device through a transmission coil based on a designated voltage (or current) (e.g., a first voltage (or first current)) of a designated phase (e.g., a first phase) before wireless power transmission. The wireless power transmission device 100 according to an embodiment may measure a phase (e.g., a second phase) of a voltage (or current) (e.g., a second voltage or a second current) of the transmission coil while outputting the first power. The wireless power transmission device 100 according to an embodiment may identify (confirm or determine) the difference between the first phase and the second phase, or may identify (confirm or determine) the second phase. The wireless power transmission device 100 according to an embodiment may store phase information corresponding to each of the wireless power reception devices 110-1 to 110-n, and may identify (confirm or determine) which of the wireless power reception devices 110-1 to 110-n the difference between the first phase and the second phase corresponds to (or the type (or kind) of the wireless power reception device). The wireless power transmission device 100 according to an embodiment may perform wireless power transmission based on the identified wireless power reception device or wireless power reception device type.

The wireless power reception devices 110-1 to 110-n according to an embodiment may include at least one capacitor. The wireless power reception devices 110-1 to 110-n may have different values (e.g., capacitances) of at least one capacitor according to each or type (or kind). The wireless power reception devices 110-1 to 110-n may have different capacitor values according to each or type (or kind), and thus the phases of the signals responding to the first power (e.g., ping power) from the wireless power transmission device 100 may be different from each other.

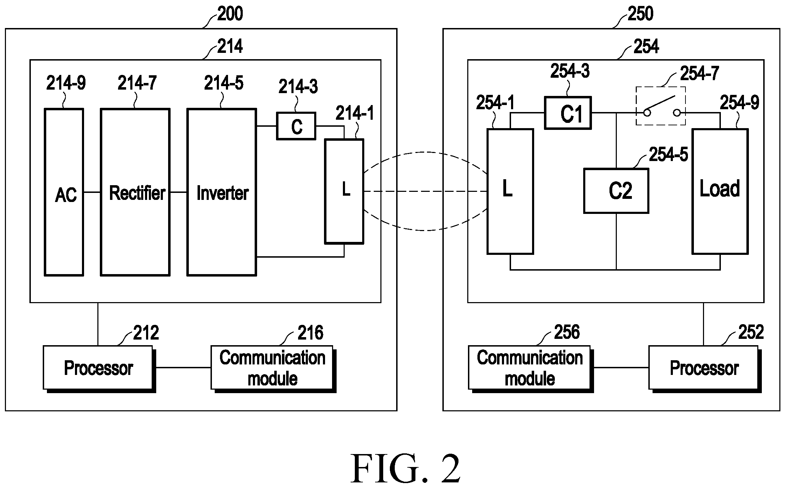

FIG. 2 is a block diagram illustrating a wireless power transmission device and a wireless power reception device according to an embodiment.

Referring to FIG. 2, a wireless power transmission device 200 (e.g., the wireless power transmission device 100 of FIG. 1) according to an embodiment may include a processor 212, power transmission circuitry 214, and a communication module 216.

The processor 212 according to an embodiment may include at least one micro processing unit (MCU). The processor 212 according to an embodiment may control the power transmission circuitry 214 to output first power (e.g., ping power) for detecting the wireless power reception device 250 through the transmission coil 214-1 based on the first voltage (or first current) of the first phase before wireless power transmission. The processor 212 according to an embodiment may identify (or confirm) the phase (e.g., the second phase) of the voltage (or current) (e.g., the second voltage or the second current) of the transmission coil 214-1 while outputting the first power through the power transmission circuitry 214. For example, the processor 212 may receive or identify the second phase of the second voltage or the second current flowing through the transmission coil 214-1 measured through a voltage (or current) sensor, and identify (confirm or determine) the difference between the first phase and the second phase. The processor 212 according to an embodiment may identify (confirm or determine) which of the plurality of wireless power reception devices the difference between the first phase and the second phase corresponds to (or the type (or kind) of the wireless power reception device), based on the phase difference information corresponding to each of the plurality of wireless power reception devices (e.g., 110-1 to 110-n of FIG. 1) stored in the memory. The processor 212 according to an embodiment may control the power transmission circuitry 214 to transmit wireless power (e.g., the second power) to the wireless power reception device 250 based on the identified wireless power reception device 250 or type of the wireless power reception device 250.

The power transmission circuitry 214 according to an embodiment may output the first power before wireless power transmission under the control of the processor 212, and may output second power when transmitting wireless power to the wireless power reception device 250 detected by the first power. The power transmission circuitry 214 according to an embodiment may include a transmission coil 214-1, a capacitor 214-3, an inverter 214-5, a rectifier 214-7, and an alternating current (AC) power generator 214-9. The AC power generator 214-9 according to an embodiment may generate AC power. The rectifier 214-7 and the inverter 214-5 according to an embodiment may convert AC power into direct current (DC) power. The transmission coil 214-1 and the capacitor 214-3 according to an embodiment may output DC power in a high frequency (RF) waveform.

The communication module (or communication circuitry) 216 according to an embodiment may communicate with the wireless power reception device 250. For example, the communication module 216 may communicate with the communication module 256 of the wireless power reception device 250 using the same frequency as the frequency used for power transmission in the transmission coil 214-1 during wireless power transmission (e.g., in-band scheme). Alternatively, the communication module 216 may communicate with the communication module 256 of the wireless power reception device 250 using a frequency different from a frequency used for power transmission in the transmission coil 214-1 (e.g., an out-band scheme). For example, when using the out-band scheme, the communication module 216 may obtain information (e.g., voltage information, current information, various packets, messages, etc.) related to the wireless power reception state of the wireless power reception device 250 from the wireless power reception device 250 using any one of various short-range communication schemes such as Bluetooth, Bluetooth low energy (BLE), Wi-Fi, and near field communication (NFC).

According to an embodiment, the wireless power transmission device 200 may further include at least one sensor circuitry. For example, the at least one sensor circuitry may include at least one of current (or voltage) sensors, and may detect the state of the output signal of the wireless power transmission device 200, e.g., the magnitude of current, voltage, or power while outputting the first power, using the current (or voltage) sensor. For example, the current (or voltage) sensor may measure a signal in the power transmission circuitry 214. For example, the current (or voltage) sensor may measure a signal in at least some of the transmission coil 214-1, the capacitor 214-3, the inverter 214-5, the rectifier 214-7, and the AC power generator 214-9. For example, the current (or voltage sensor) may include a circuit for measuring a signal at a front end of the transmission coil 214-1. According to various embodiments, the current (or voltage) sensor may be a detection circuit for detecting (or identifying or confirming) the difference between the first phase of the first voltage (or first current) flowing through the power transmission circuitry 214 before wireless power transmission and the second phase of the second voltage or second current flowing through the power transmission circuitry 214 during wireless power transmission.

According to an embodiment, the wireless power reception device 250 (e.g., one of the wireless power reception devices 110-1 to 110-n of FIG. 1) may include a processor 252, power reception circuitry 254, and a communication module 256.

The processor 252 according to an embodiment may control the power reception circuitry 254 and the communication module 256. The processor 252 according to an embodiment may control the switch 254-7 of the power reception circuitry 254 to turn off before wireless power reception and turn on during wireless power reception (e.g., when wireless power reception starts based on ping power detection). For example, the processor 252 may control on or off of the switch 254-7 based on a power on or off input or an operation start or end input of the user, or may control on or off of the switch 254-7 based on occurrence of a designated condition (e.g., a voltage or current measured by generation of resonance with the wireless power transmission device 200 in a power off state is equal to or greater than or less than a designated voltage or current). The processor 252 according to an embodiment may control to perform a designated operation (or function) (e.g., a blender function, a kettle function, or a toaster function) using power received according to wireless power reception through the power reception circuitry 254 in the on state of the switch 254-7.

The power reception circuitry 254 according to an embodiment may include a reception coil 254-1, a first capacitor C1 254-3, a second capacitor C2 254-5, a switch 254-7, and a load 254-9. The power reception circuitry 254 according to an embodiment may turn off the switch 254-7 before an operation for wireless power reception (or before wireless power reception) under the control of the processor 252 to prevent the reception coil 254-1, the first capacitor C1 254-3, and the second capacitor C2 254-5 from being connected to the load 254-9. As the ping power is detected, the power reception circuitry 254 according to an embodiment may turn on the switch 254-7 during an operation for wireless power reception (or during wireless power reception) under the control of the processor 252 to prevent the reception coil 254-1, the first capacitor C1 254-3, and the second capacitor C2 254-5 from being connected to the load 254-9. For example, in the off state of the switch 254-7, the reception coil 254-1, the first capacitor C1 254-3, and the second capacitor C2 254-5 may participate in the resonance with the wireless power transmission device 200, and in the on state of the switch 254-7, the reception coil 254-1, the first capacitor C1 254-3, the second capacitor C2 254-5, and the load 254-9 may participate in the resonance with the wireless power transmission device 200. According to an embodiment, the value of the first capacitor C1 254-3 and/or the second capacitor C2 254-5 participating in the resonance in the off state of the switch 254-7 may have a value designated as a value (e.g., total capacitance) used to identify the type (or kind) of the wireless power reception device 250 or the wireless power reception device 250. For example, each of the wireless power reception devices 110-1 to 110-n may be implemented to have the same first capacitance of the first capacitor C1 254-3 and a different second capacitance of the second capacitor C2 254-5, so that the second capacitance of the second capacitor C2 254-5 is substantially used to identify the wireless power reception device 250 itself or the type (or kind) of the wireless power reception device 250. For example, in the state in which the first capacitance of the first capacitor C 1 254-3 is fixed, the second capacitances of the second capacitors C2 254-5 may be smaller than the first capacitance and different from each other for each of the wireless power reception devices 110-1 to 110-n, or in the state in which the first capacitance of the first capacitor C1 254-3 is fixed, the second capacitances of the second capacitors C2 254-5 may be larger than the first capacitance and different from each other for each of the wireless power reception devices 110-1 to 110-n. For example, when the wireless power reception devices 110-1 to 110-n include a first wireless power reception device (e.g., a blender), a second wireless power reception device (e.g., a kettle), and a third wireless power reception device (e.g., a toaster), the first capacitances of the respective first capacitors C1 254-3 of the blender, the kettle, and the toaster may be the same as the first value (e.g., 50uf), and the second capacitances of the respective second capacitors C2 254-5 of the blender, the kettle, and the toaster may be different values (e.g., 10uF, 30uF, or 50uF) that are smaller than or equal to the first value. As another example, the first capacitances of the respective first capacitors C1 254-3 of the blender, the kettle, and the toaster may be the same as the second value (e.g., 10uf), and the second capacitances of the respective second capacitors C2 254-5 of the blender, the kettle, and the toaster may be different values (e.g., 10uF, 30uF, or 50uF) that are greater than or equal to the second value.

The communication module (or communication circuitry) 256 according to an embodiment may communicate with the communication module 216 of the wireless power transmission device 200. For example, the communication module 256 may communicate with the communication module 216 of the wireless power transmission device 200 using the same frequency as the frequency used for power transmission in the transmission coil 214-1 during wireless power transmission (e.g., in-band scheme). Alternatively, the communication module 256 may communicate with the communication module 216 of the wireless power transmission device 200 using a frequency different from a frequency used for power transmission in the transmission coil 214-1 (e.g., an out-band scheme). For example, when using the out-band scheme, the communication module 256 may transmit information (e.g., voltage information, current information, various packets, messages, etc.) related to the wireless power reception state to the wireless power transmission device 200 using any one of various short-range communication schemes such as Bluetooth, Bluetooth low energy (BLE), Wi-Fi, and near field communication (NFC).

According to an embodiment of the disclosure, a wireless power transmission device (e.g., the wireless power transmission device 100 of FIG. 1 or the wireless power transmission device 200 of FIG. 2) may comprise power transmission circuitry (e.g., the power transmission circuitry 214 of FIG. 2) and at least one processor (e.g., the processor 212 of FIG. 2). The at least one processor may be configured to output first power for detecting an external wireless power reception device through the power transmission circuitry before wireless power transmission and identify a first phase of a first current or a first voltage when outputting the first power, identify a second phase of a second current or a second voltage by the wireless power reception device through the power transmission circuitry while outputting the first power, identify a difference between the first phase and the second phase, identify the wireless power reception device based on the difference between the first phase and the second phase, and control the power transmission circuitry to transmit second power for wireless power transmission to the identified wireless power reception device.

According to various embodiments, the wireless power transmission device may further comprise memory storing phase difference information corresponding to each of a plurality of wireless power reception devices.

According to various embodiments, the at least one processor may be configured to identify the wireless power reception device based on the difference between the first phase and the second phase and the phase difference information.

According to various embodiments, the power transmission circuitry may include at least one of a transmission coil, at least one capacitor, an inverter, a rectifier, and an AC power generator.

According to various embodiments, the wireless power transmission device may further comprise a communication module. The communication module may be configured to communicate with the external wireless power reception device in an in-band scheme or an out-band scheme.

According to various embodiments, the wireless power transmission device may further comprise sensor circuitry. The sensor circuitry may be configured to measure the second current or the second voltage of the power transmission circuitry while outputting the first power.

According to various embodiments, a wireless power reception device (e.g., the wireless power reception device 250 of FIG. 2) may comprise a communication module, power reception circuitry (e.g., the power reception circuitry 254 of FIG. 2) including a first capacitor, a second capacitor, a switch, and a load, and at least one processor (e.g., the processor 252 of FIG. 2). The at least one processor may be configured to control the switch to turn off before a wireless power reception operation not to connect the first capacitor and the second capacitor to the load and control the switch to turn on to connect the first capacitor and the second capacitor to the load if the wireless power reception operation starts as ping power from an external wireless power transmission device is detected through the power reception circuitry.

According to various embodiments, a first capacitance of the first capacitor and/or a second capacitance of the second capacitor may be set to have designated values that are used for the wireless power transmission device to identify the wireless power reception device.

According to various embodiments, the first capacitance of the first capacitor may be larger than the second capacitance of the second capacitor by a designated capacitance value or more.

According to various embodiments, the first capacitance of the first capacitor may be smaller than the second capacitance of the second capacitor by a designated capacitance value or more.

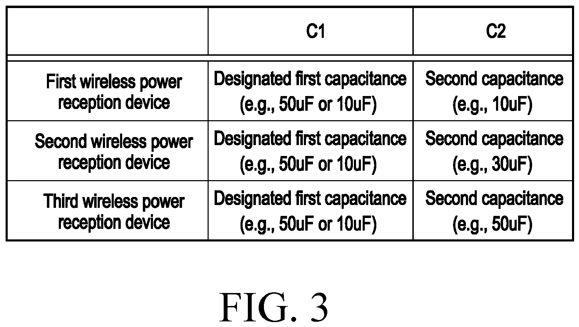

FIG. 3 is a view illustrating examples of a C1 value and a C2 value of wireless power reception devices according to an embodiment.

Referring to FIG. 3, wireless power reception devices (e.g., 110-1 to 110-n of FIG. 1) capable of receiving wireless power from a wireless power transmission device (e.g., the wireless power transmission device 100 of FIG. 1 or the wireless power transmission device 200 of FIG. 2) may include a first wireless power reception device (e.g., a blender), a second wireless power reception device (e.g., a kettle), and a third wireless power reception device (e.g., a toaster).

According to an embodiment, the first capacitor C1 (e.g., the first capacitor 254-3 of FIG. 2) of each of the first wireless power reception device, the second wireless power reception device, and the third wireless power reception device may have a designated first capacitance (e.g., 50 uF or 10 uF).

According to an embodiment, the respective second capacitors C2 (e.g., the second capacitor C2 254-5 of FIG. 2) of the first wireless power reception device, the second wireless power reception device, and the third wireless power reception device may be implemented to have different values (e.g., 10uF, 30uF, or 50uF) that are smaller than or equal to a designated first capacitance (e.g., 50uF or 10uF), or different values (e.g., 10uF, 30uF, or 50uF) that are greater than or equal to a designated first capacitance (e.g., 50uF or 10uF).

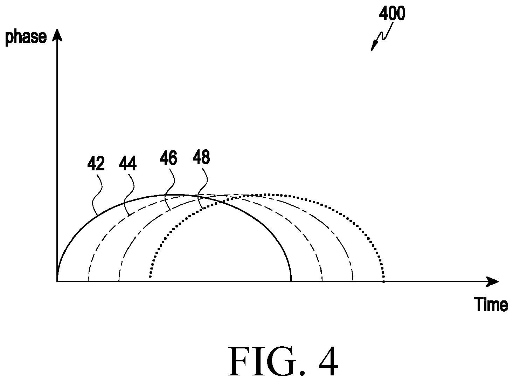

FIG. 4 is a view illustrating examples of a first phase of a first voltage when a wireless power transmission device outputs first power (e.g., ping power) before wireless power transmission and second phases of second currents measured as a wireless power reception device responds to the first power according to an embodiment.

Referring to FIG. 4, in the phase graph 400 according to an embodiment, the horizontal axis may denote the time, and the vertical axis may denote the phase. According to an embodiment, when the wireless power transmission device outputs the first power (e.g., ping power) before wireless power transmission, the first phase of the first voltage may be measured as a first phase curve 42. The processor 212 according to an embodiment may measure the phase of the current (or current) flowing through the transmission coil 214-1 while outputting the first power through the power transmission circuitry 214. For example, the phase (e.g., the second phase) of the voltage (or current) (e.g., the second voltage or the second current) of the transmission coil 214-1 may be different depending on the type or kind (e.g., the capacitance of C1 and/or C2) of the wireless power reception device responding to the first power. For example, the second phase curve 44 may indicate the second phase of the second current according to the first power response by the first wireless power reception device. For example, the third phase curve 46 may indicate the third phase of the third current according to the first power response by the second wireless power reception device. For example, the fourth phase curve 48 may indicate the fourth phase of the fourth current according to the first power response by the third wireless power reception device.

The processor 212 according to an embodiment may identify (confirm or determine) a difference between the first phase and the second phase, a difference between the first phase and the third phase, and/or a difference between the first phase and the fourth phase. The processor 212 according to an embodiment may identify that the wireless power reception device responding to the first power is the first wireless power reception device, based on the difference between the first phase and the second phase. The processor 212 according to an embodiment may identify that the wireless power reception device responding to the first power is the second wireless power reception device, based on the difference between the first phase and the third phase. The processor 212 according to an embodiment may identify that the wireless power reception device responding to the first power is the third wireless power reception device, based on the difference between the first phase and the fourth phase. In the disclosure, examples of wireless power reception devices have been described as first to third wireless power reception devices, but it will be apparent to those skilled in the art that the processor 212 may identify fewer or more wireless power reception devices through identification of a phase difference. According to an embodiment, the processor 212 may compare the phase difference information corresponding to each of the plurality of wireless power reception devices (e.g., 110-1 to 110-n of FIG. 1) with the difference between the first phase and the second phase, the difference between the first phase and the third phase, and/or the difference between the first phase and the fourth phase to identify (confirm or determine) which of the plurality of wireless power reception devices the wireless power reception device currently responding to the first power corresponds to (or the type (or kind) of the wireless power reception device). The processor 212 according to an embodiment may control the power transmission circuitry 214 to transmit wireless power (e.g., the second power) to the wireless power reception device based on the identified wireless power reception device or the type of the wireless power reception device.

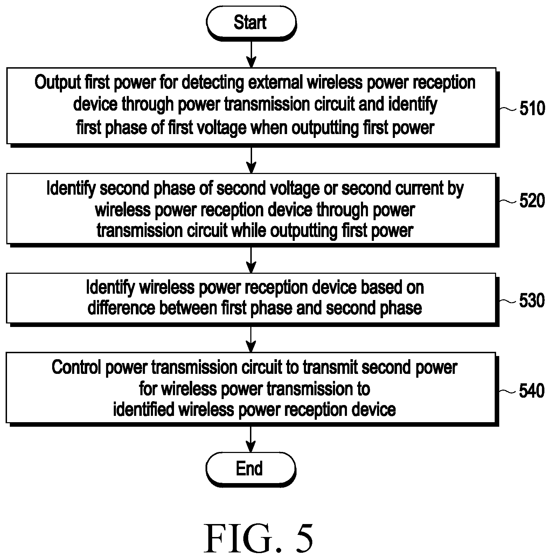

FIG. 5 is a flowchart illustrating a mode control operation based on wireless power reception device detection in a wireless power transmission device according to an embodiment.

Referring to FIG. 5, a processor (e.g., the processor 212 of FIG. 2) of a wireless power transmission device (e.g., the electronic device 100 of FIG. 1 or the electronic device 200 of FIG. 2) according to an embodiment may perform at least one of operations 510 to 540.

In operation 510, the processor 212 according to an embodiment may output first power (e.g., ping power) for detecting an external wireless power reception device 250 through the power transmission circuitry 214, and may identify a first phase of a first voltage (and/or first current) when outputting the first power. For example, the processor 212 may output first power (e.g., ping power) for detecting the wireless power reception device 250 through the transmission coil 214-1 based on the first voltage (or the first current) by the power transmission circuitry 214 before wireless power transmission and may identify (confirm or determine) the first phase of the first voltage.

In operation 520, the processor 212 according to an embodiment may identify (or confirm) the second phase of the second voltage or the second current by the wireless power reception device while outputting the first power. The processor 212 according to an embodiment may identify (or confirm) the phase (e.g., the second phase) of the voltage (or current) (e.g., the second voltage or the second current) of the transmission coil 214-1 while outputting the first power through the power transmission circuitry 214. For example, the processor 212 may receive or identify the second phase of the second voltage or the second current flowing through the transmission coil 214-1 measured through the voltage (or current) sensor.

In operation 530, the processor 212 according to an embodiment may identify (confirm or determine) the wireless power reception device based on the difference between the first phase and the second phase. The processor 212 according to an embodiment may identify the difference between the first phase and the second phase and identify (confirm or determine) which of the plurality of wireless power reception devices the difference between the first phase and the second phase corresponds to (or the type (or kind) of the wireless power reception device), based on the identified difference between the first phase and the second phase and the phase difference information corresponding to each of the plurality of wireless power reception devices (e.g., 110-1 to 110-n of FIG. 1) stored in the memory.

In operation 540, the processor 212 according to an embodiment may control the power transmission circuitry 214 to transmit wireless power (e.g., the second power) to the identified wireless power reception device 250. For example, the processor 212 may identify a wireless power transmission protocol (or a wireless power transmission scheme) based on the identified type (or kind) of the wireless power reception device 250, and may control the power transmission circuitry 214 to transmit wireless power (e.g., the second power) to the wireless power reception device 250 using the corresponding wireless power transmission protocol (or wireless power transmission scheme).

According to various embodiments, a method for controlling an operation mode based on wireless power reception device (e.g., the wireless power reception device 250 of FIG. 2) detection by a wireless power transmission device (e.g., the wireless power transmission device 100 of FIG. 1 or the wireless power transmission device 200 of FIG. 2) may comprise outputting first power for detecting an external wireless power reception device through power transmission circuitry before wireless power transmission and identifying a first phase of a first current or a first voltage when outputting the first power, identifying a second phase of a second current or a second voltage by the wireless power reception device through the power transmission circuitry while outputting the first power, identifying a difference between the first phase and the second phase, identifying the wireless power reception device based on the difference between the first phase and the second phase, and controlling the power transmission circuitry to transmit second power for wireless power transmission to the identified wireless power reception device.

According to various embodiments, the method may further comprise obtaining phase difference information corresponding to each of a plurality of wireless power reception devices from memory.

According to various embodiments, the method may further comprise identifying the wireless power reception device based on the difference between the first phase and the second phase and the phase difference information.

According to various embodiments, the power transmission circuitry may include at least one of a transmission coil, at least one capacitor, an inverter, a rectifier, and an AC power generator.

According to various embodiments, the method may further comprise communicating with the external wireless power reception device in an in-band scheme or an out-band scheme through a communication module.

According to various embodiments, the method may further comprise measuring the second current or the second voltage of the power transmission circuitry while outputting the first power, through sensor circuitry.

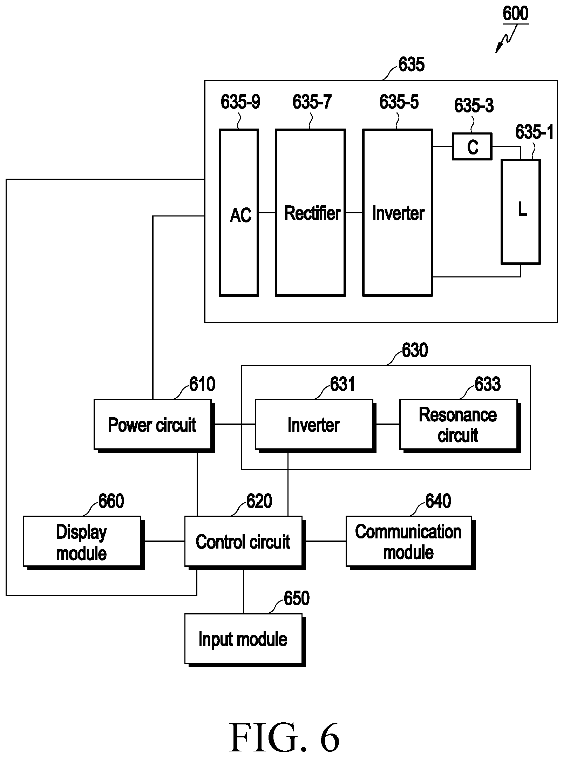

FIG. 6 is a view illustrating a configuration of an induction electronic device including a wireless power transmission device according to an embodiment;

Referring to FIG. 6, some or all components of a wireless power transmission device (e.g., the wireless power transmission device 100 of FIG. 1 or the wireless power transmission device 200 of FIG. 2) according to an embodiment may be implemented by being included in the induction electronic device 600.

The induction electronic device 600 according to an embodiment may include power circuitry 610, control circuitry (or a processor) 620, an induction heating unit 630, a wireless power transmission unit 635, a communication module 640, an input module 650, and a display module 660. Without being limited thereto, the induction electronic device 600 may further include a sound output module (not shown), a sensor module (not shown), and/or memory (not shown).

According to an embodiment, the power circuitry 610 may be configured to receive power from an external power supply device (not shown), convert the power into a voltage required by each component (e.g., the power circuitry 610, the control circuitry (or processor) 620, the induction heating unit 630, the wireless power transmission unit 635, the communication module 640, the input module 650, the display module 660, or other components of FIG. 6), and apply the converted voltage to each component.

According to an embodiment, the control circuitry 620 may include at least one processor. For example, the control circuitry 620 may include a microcontroller unit (MCU) that includes a microprocessor and an input/output module in one chip and is capable of various 'control' or 'operation' tasks through programming. The control circuitry 620 may include a signal conversion circuit connected to at least one processor.

According to an embodiment, the control circuitry 620 of the induction electronic device 600 may control each of the induction heating unit 630 and/or the wireless power transmission unit 635. According to an embodiment, the control circuitry 620 may control the induction heating unit 630 and the wireless power transmission unit 635 to simultaneously operate, or may control the induction heating unit 630 and the wireless power transmission unit 635 so that, when either the induction heating unit 630 or the wireless power transmission unit 635 operates, the other does not operate.

According to an embodiment, when an input for induction on (start heating) is received by a user input interface through the input module 650, the control circuitry 620 may apply power to the induction heating unit 630 to switch to an operation state, and may perform an electromagnetic induction heating operation through the induction heating unit 630. As the control circuitry 620 detects a change in load, the control circuitry 620 may identify that there is a cooking device capable of induction heating in a partial area of the exposure surface.

According to an embodiment, when an input for wireless power transmission is received through the input module 650 (e.g., a user input interface) or when it is identified by the wireless power transmission unit 635 that the wireless power reception unit is present in a partial area of the exposure surface, the control circuitry 620 may control the wireless power transmission unit 635 to output first power (e.g., ping power) for detecting the wireless power reception unit through the transmission coil 635-1 before wireless power transmission. The control circuitry 620 according to an embodiment may identify a first voltage (or a first current) of a first phase corresponding to the first power. The control circuitry 620 according to an embodiment may identify (or confirm) the phase (e.g., the second phase) of the voltage (or current) (e.g., the second voltage or the second current) of the transmission coil 635-1 while outputting the first power through the wireless power transmission unit 635. For example, the control circuitry 620 may receive or identify the second phase of the second voltage or the second current flowing through the transmission coil 635-1 measured through a voltage (or current) sensor, and identify (confirm or determine) the difference between the first phase and the second phase. The control circuitry 620 according to an embodiment may identify (confirm or determine) which of the plurality of wireless power reception devices the difference between the first phase and the second phase corresponds to (or the type (or kind) of the wireless power reception device), based on the phase difference information corresponding to each of the plurality of wireless power reception devices (e.g., 110-1 to 110-n of FIG. 1) stored in the memory (not shown). The control circuitry 620 according to an embodiment may control the wireless power transmission unit 635 to transmit wireless power (e.g., the second power) to the wireless power reception device based on the identified wireless power reception device or the type of the wireless power reception device.

The induction heating unit 630 according to an embodiment may include a resonance circuit 633 including an inverter 631 and a coil (e.g., an induction coil). The inverter 631 may be connected to a signal conversion circuit of the control circuitry 620 and may convert a DC voltage into an AC voltage. The inverter 631 may apply a high-frequency current corresponding to a frequency f set or changed to control output power to the resonance circuit 633 under the control of the control circuitry 620. When a high-frequency circuit is applied to the coil of the resonance circuit 633 and a cooking device capable of induction heating is present in a partial area of the exposure surface of the induction electronic device 600, an electromagnetic induction heating operation may be performed.

The wireless power transmission unit 635 according to an embodiment may output first power before wireless power transmission under the control of the control circuitry 620, and may output second power when transmitting wireless power to the wireless power reception unit detected by the first power. The power transmission unit 635 according to an embodiment may include a transmission coil 635-1, a capacitor 635-3, an inverter 635-5, a rectifier 635-7, and an alternating current (AC) power generator 635-9. The AC power generator 635-9 according to an embodiment may generate AC power. The rectifier 635-7 and the inverter 635-5 according to an embodiment may convert AC power into direct current (DC) power. The transmission coil 635-1 and the capacitor 635-3 according to an embodiment may output DC power in a high frequency (RF) waveform.

The communication module 640 according to an embodiment may communicate with a wireless power reception device. For example, the communication module 640 may communicate with the communication module of the wireless power reception device using the same frequency as the frequency used for power transmission in the transmission coil 635-1 during wireless power transmission (e.g., in-band scheme). Alternatively, the communication module 540 may communicate with the communication module of the wireless power reception device using a frequency different from a frequency used for power transmission in the transmission coil 635-1 (e.g., an out-band scheme). For example, when using the out-band scheme, the communication module 640 may obtain information (e.g., voltage information, current information, various packets, messages, etc.) related to the wireless power reception state of the wireless power reception device from the wireless power reception device using any one of various short-range communication schemes such as Bluetooth, Bluetooth low energy (BLE), Wi-Fi, and near field communication (NFC).

According to an embodiment, the input module (or user interface) 650 may receive a user input related to function manipulation of the induction electronic device 600 and may transfer the received user input to the control circuitry 620. The input module 650 may include menus (e.g., buttons or input interfaces) related to provided functions. A command or data to be used by a component (e.g., the control circuitry 620) of the induction electronic device 600 may be received from the outside (e.g., the user) of the induction electronic device 600.

According to an embodiment, the display module 660 may display an object indicating menus (e.g., buttons or input interfaces) related to provided functions. The display module 660 may be disposed in a partial area of the exposure surface of the induction electronic device 600. Here, the partial area is an area different from the area in which the resonance circuit 633 is disposed. The display module 660 may display notification information related to the execution and/or interruption of the induction heating function and/or the wireless power transmission function. The display module 660 may display information according to the operation of the functions provided by the induction electronic device 600. The display module 660 may visually provide information to the outside (e.g., the user) of the induction electronic device 600. The display 660 may include, for example, a display, a hologram device, or a projector and control circuitry to control a corresponding one of the display, hologram device, and projector. According to an embodiment, the display 660 may include a touch sensor configured to detect a touch, or a pressure sensor configured to measure the intensity of a force generated by the touch.

According to an embodiment, the sound output module (not shown) of the induction electronic device 600 may output a sound signal to the outside of the induction electronic device 600. The sound output module may output, to the control circuitry 620, notification information related to the execution and/or interruption of the induction heating function and/or the wireless power transmission function, as a sound signal. The sound output module may output information according to the operation of the functions provided by the induction electronic device 600 as a sound signal. The sound output module may include, e.g., a speaker or a receiver. The speaker may be used for general purposes, such as playing multimedia or playing record. The receiver may be used for receiving incoming calls. According to an embodiment, the receiver may be implemented as separate from, or as part of the speaker.

According to an embodiment, the audio module (not shown) of the induction electronic device 600 may convert a sound into an electrical signal or, conversely, may convert an electrical signal into a sound. According to an embodiment, the audio module may obtain the sound via the input module 650, or output the sound via the sound output module or an external electronic device (e.g., a speaker or headphone) directly or wirelessly connected to the induction electronic device 600.

According to an embodiment, the sensor module (not shown) of the induction electronic device 600 may detect an operational state (e.g., power or temperature) of the induction electronic device 600 or an external environmental state (e.g., the user's state), and then generate an electrical signal or data value corresponding to the detected state. According to an embodiment, the sensor module may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

According to an embodiment, the haptic module (not shown) of the induction electronic device 600 may convert an electrical signal into a mechanical stimulus (e.g., a vibration or motion) or electrical stimulus which may be recognized by a user via his tactile sensation or kinesthetic sensation. According to an embodiment, the haptic module may include, for example, a motor, a piezoelectric element, or an electric stimulator.

According to an embodiment, the memory of the induction electronic device 600 may store various data used by at least one component (e.g., the processor or a sensor module) of the induction electronic device 500. The various data may include, for example, software (e.g., the program) and input data or output data for a command related thererto. The memory may include a volatile or non-volatile memory. The program may be stored, as software, in the memory and may include, e.g., an operating system (OS), middleware, or an application.

According to an embodiment, at least one processor included in the control circuitry 620 may execute, for example, software (e.g., a program) to control at least one other component (e.g., a hardware or software component) of the electronic device coupled with the processor, and may perform various data processing or computation. According to one embodiment, as at least part of the data processing or computation, the processor may store a command or data received from another component (e.g., the sensor module or communication module 640) onto volatile memory, process the command or the data stored in the volatile memory, and store resulting data in non-volatile memory. According to an embodiment, the processor may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. For example, when the induction electronic device 600 includes the main processor and the auxiliary processor, the auxiliary processor may be configured to use lower power than the main processor or to be specified for a designated function. The auxiliary processor may be implemented separately from, or as part of, the main processor.

As described above, in an embodiment, the main components of the wireless power transmission device have been described through the wireless power transmission devices 100 and 200 of FIGS. 1 and 2 and the induction electronic device 600 of FIG. 6. In various embodiments, however, all of the components of FIGS. 1, 2, and 6 are not essential components, and the wireless power transmission device may be implemented with more or less components than those shown. Further, the positions of the major components of the wireless power transmission device described above in connection with FIGS. 1, 2, and 6 may be varied according to various embodiments.

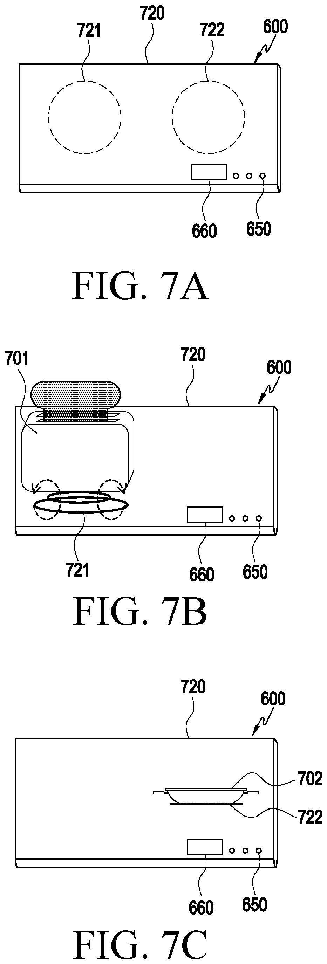

FIG. 7A is a view illustrating an example induction electronic device according to an embodiment. FIG. 7B is a view illustrating an example in which a wireless power reception device is placed on an exposure surface of an induction electronic device according to an embodiment. FIG. 7C is a view illustrating an example in which a cooking device is placed on an exposure surface of an induction electronic device according to an embodiment.

Referring to FIG. 7A, the induction electronic device 600 according to an embodiment may include at least one area 721 and/or 722 of the exposure surface 720, and the at least one area 721 and/or 722 may include a cooking device heating area (hereinafter, 722 is assumed as a cooking device heating area and described as an example) and/or a wireless power transmission area (hereinafter, 721 is assumed as a wireless power transmission area and described as an example). The induction electronic device 600 according to an embodiment may further include a display module 660 and/or an input module 650 in another area of the exposure surface 720.

Referring to FIG. 7B, the control circuitry 620 of the induction electronic device 600 according to an embodiment may control the wireless power transmission unit 635 to output first power (e.g., ping power) for detecting the wireless power reception device through the wireless power transmission area 721. The control circuitry 620 of the induction electronic device 600 according to an embodiment may identify (or confirm) the phase (e.g., the second phase) of the voltage (or current) (e.g., the second voltage or the second current) of the transmission coil 635-1 while outputting the first power through the wireless power transmission unit 635, and may identify (confirm or determine) which of the plurality of wireless power reception devices the difference between the first phase and the second phase corresponds to (or the type (or kind) of the wireless power reception device). The control circuitry 620 according to an embodiment may control the wireless power transmission unit 635 to transmit wireless power (e.g., the second power) to the wireless power reception device based on the identified wireless power reception device 701 (e.g., a toaster) or the type of the wireless power reception device 701.

Referring to FIG. 7C, when an input for induction on (start heating) is received by the user input interface through the input module 650, the control circuitry 620 of the induction electronic device 600 according to an embodiment may apply power to the induction heating unit 630 to switch to an operation state, and may perform an induction heating operation on the cooking device heating area 722 through the induction heating unit 630 to inductively heat the cooking device 702.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., the memory 940) that is readable by a machine (e.g., the wireless power transmission device 100 or 200 or the induction electronic device 600). For example, a processor (e.g., the processor 212 or control circuitry 600) of the machine (e.g., the wireless power transmission device 100 or 200 or the induction electronic device 600) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments, in a non-transitory storage medium storing instructions, the instructions may be configured to, when executed by at least one processor, enable the at least one processor to perform at least one operation. The at least one operation may comprise outputting first power for detecting an external wireless power reception device through power transmission circuitry before wireless power transmission and identifying a first phase of a first current or a first voltage when outputting the first power, identifying a second phase of a second current or a second voltage by the wireless power reception device through the power transmission circuitry while outputting the first power, identifying a difference between the first phase and the second phase, identifying the wireless power reception device based on the difference between the first phase and the second phase, and controlling the power transmission circuitry to transmit second power for wireless power transmission to the identified wireless power reception device.

The embodiments shown and described in the specification and the drawings are provided merely for better understanding of the present invention, and the present invention should not be limited thereto or thereby. It should be appreciated by one of ordinary skill in the art that various changes in form or detail may be made to the embodiments without departing from the scope of the present disclosure defined by the following claims.

## Claims

1. A wireless power transmission device, comprising:
power transmission circuitry; and
at least one processor, wherein the at least one processor is configured to:
output first power for detecting an external wireless power reception device through the power transmission circuitry before wireless power transmission and identify a first phase of a first current or a first voltage when outputting the first power;
identify a second phase of a second current or a second voltage by the wireless power reception device through the power transmission circuitry while outputting the first power;
identify a difference between the first phase and the second phase;
identify the wireless power reception device based on the difference between the first phase and the second phase; and
control the power transmission circuitry to transmit second power for wireless power transmission to the identified wireless power reception device.

2. The wireless power transmission device of claim 1, further comprising memory storing phase difference information corresponding to each of a plurality of wireless power reception devices,
wherein the at least one processor is configured to identify the wireless power reception device based on the difference between the first phase and the second phase and the phase difference information.

3. The wireless power transmission device of claim 1, wherein the power transmission circuitry includes at least one of a transmission coil, at least one capacitor, an inverter, a rectifier, and an AC power generator.

4. The wireless power transmission device of claim 1, further comprising a communication module,
wherein the communication module is configured to communicate with the external wireless power reception device in an in-band scheme or an out-band scheme.

5. The wireless power transmission device of claim 1, further comprising sensor circuitry,
wherein the sensor circuitry is configured to measure the second current or the second voltage of the power transmission circuitry while outputting the first power.

6. A wireless power reception device, comprising:
a communication module;
power reception circuitry including a first capacitor, a second capacitor, a switch, and a load; and
at least one processor,
wherein the at least one processor is configured to control the switch to turn off before a wireless power reception operation not to connect the first capacitor and the second capacitor with the load and control the switch to turn on to connect the first capacitor and the second capacitor with the load when the wireless power reception operation starts as ping power from an external wireless power transmission device is detected through the power reception circuitry.

7. The wireless power reception device of claim 6, wherein a first capacitance of the first capacitor and/or a second capacitance of the second capacitor are set to have designated values that are used for the wireless power transmission device to identify the wireless power reception device, and
wherein the first capacitance of the first capacitor is larger or smaller than the second capacitance of the second capacitor by a designated capacitance value or more.

8. A method for controlling an operation mode based on wireless power reception device detection by a wireless power transmission device, the method comprising:
outputting first power for detecting an external wireless power reception device through power transmission circuitry before wireless power transmission and identifying a first phase of a first current or a first voltage when outputting the first power;
identifying a second phase of a second current or a second voltage by the wireless power reception device through the power transmission circuitry while outputting the first power;
identifying a difference between the first phase and the second phase;
identifying the wireless power reception device based on the difference between the first phase and the second phase; and
controlling the power transmission circuitry to transmit second power for wireless power transmission to the identified wireless power reception device.

9. The method of claim 8, further comprising:
obtaining phase difference information corresponding to each of a plurality of wireless power reception devices from memory; and
identifying the wireless power reception device based on the difference between the first phase and the second phase and the phase difference information.

10. The method of claim 8, wherein the power transmission circuitry includes at least one of a transmission coil, at least one capacitor, an inverter, a rectifier, and an AC power generator.

11. The method of claim 8, further comprising communicating with the external wireless power reception device in an in-band scheme or an out-band scheme through a communication module.

12. The method of claim 8, further comprising measuring the second current or the second voltage of the power transmission circuitry while outputting the first power, through sensor circuitry.

13. A non-transitory storage medium storing a program that, when executed by a processor of a wireless power transmission device, enable the processor to:
output first power for detecting an external wireless power reception device through power transmission circuitry before wireless power transmission and identify a first phase of a first current or a first voltage when outputting the first power;
identify a second phase of a second current or a second voltage by the wireless power reception device through the power transmission circuitry while outputting the first power;
identify a difference between the first phase and the second phase;
identify the wireless power reception device based on the difference between the first phase and the second phase; and
control the power transmission circuitry to transmit second power for wireless power transmission to the identified wireless power reception device.

14. The non-transitory storage medium of claim 13, wherein the program is configured to obtain phase difference information corresponding to each of a plurality of wireless power reception devices.

15. The non-transitory storage medium of claim 13, wherein the program is configuration to identify the wireless power reception device based on the difference between the first phase and the second phase and the phase difference information.
